(19) Europäisches Patentamt
European Patent Office
Office européen des brevets

(11) EP 4 129 618 A1

(12) # EUROPEAN PATENT APPLICATION
published in accordance with Art. 153(4) EPC

(43) Date of publication:
**08.02.2023 Bulletin 2023/06**

(21) Application number: **21776553.6**

(22) Date of filing: **25.03.2021**

(51) International Patent Classification (IPC):
***B29C 45/14** (1985.01)* ***B32B 27/08** (1968.09)*

(52) Cooperative Patent Classification (CPC):
**B29C 45/14; B32B 27/08**

(86) International application number:
**PCT/JP2021/012498**

(87) International publication number:
**WO 2021/193809 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2020 JP 2020055843**

(71) Applicant: **MITSUBISHI GAS CHEMICAL COMPANY, INC.**
**Chiyoda-ku**
**Tokyo 100-8324 (JP)**

(72) Inventors:
- **FUKUNAGA Yasutaka**
**Toyonaka-shi, Osaka 561-0823 (JP)**
- **KAMEI Shota**
**Tokyo 125-8601 (JP)**
- **NAKASEKO Hiroshi**
**Tokyo 125-8601 (JP)**
- **SUZUKI Katsunori**
**Tokyo 125-8601 (JP)**

(74) Representative: **Hoffmann Eitle**
**Patent- und Rechtsanwälte PartmbB**
**Arabellastraße 30**
**81925 München (DE)**

(54) **FILM INSERT MOLDED ARTICLE AND MANUFACTURING METHOD FOR FILM INSERT MOLDED ARTICLE**

(57) Provided are a film insert molded article, an insert film, and the like that enable realization of complex shapes, that can prevent occurrence of cracks and breaks, and that have an excellent chemical resistance property and abrasion resistance property. This film insert molded article and the like are characterized by being provided with a shaped curable insert film and a thermoplastic resin layer layered on the insert film, the insert film including a curable hard-coating layer which is uncured.

EP 4 129 618 A1

## Description

TECHNICAL FIELD

The present invention relates to an insert film, a film insert molded article, and a method for manufacturing the film insert molded article.

BACKGROUND ART

For molded articles used in home appliances and automobiles, a technique of coating molded plastic products has been common and because of the large environmental burden, a technique of insert molding a decorative film has been employed (see Patent literature 1). Since requirements for chemical resistance and scratch resistance are increasing lately, there is a great demand for the use of hardcoated thermoformable films as the decorative films. A hardcoated thermoformable film is generally manufactured by applying a hardcoat solution on a base material and curing the resultant by UV irradiation.

There is a trade-off relationship between formability of a hardcoated thermoformable film and chemical resistance and scratch resistance of the thermoformable film. Specifically, in general, when formability is improved, chemical resistance and scratch resistance are deteriorated, whereas when chemical resistance and scratch resistance are improved, formability is deteriorated. Thus, in order to solve these problems, an after-cure type film has been proposed, which is applied with a hardcoat, formed before curing, and cured by UV irradiation after forming.

The following is a general insert molding method using an after-cure type film. Specifically, in a common method for manufacturing a film insert molded article, an after-cure type film is formed, cured with ultraviolet light, and placed in a mold before a molten thermoplastic resin is injected into the mold.

According to such a conventional method, however, a cured film is used for injection molding. Therefore, when an insert-molded product with a complex shape is made, cracks are likely to occur due to the hard cured film.

PRIOR ART DOCUMENTS

PATENT DOCUMENTS

Patent literature 1: Japanese Unexamined Patent Application Publication No. 2016-147489

SUMMARY OF THE INVENTION

PROBLEMS TO BE SOLVED BY THE INVENTION

The main objective of the present invention is to provide an insert film, a film insert molded article, and the like, which can realize complex shapes, prevent cracks and breaks, and have excellent chemical resistance and abrasion resistance.

MEANS FOR SOLVING THE PROBLEMS

The present invention includes the following.

(1) A film insert molded article comprising:

a shaped curable insert film; and
a thermoplastic resin layer layered on said insert film,
wherein, a curable hardcoat layer of the insert film is in an uncured state.

(2) The film insert molded article according to (1) above, which is obtained by shaping the insert film and injecting a molten thermoplastic resin onto the surface of the insert film on the other side from the curable hardcoat layer.
(3) The film insert molded article according to either one of (1) and (2) above, wherein the curable hardcoat layer contains an active energy ray-curable resin having a (meth)acryloyl group.
(4) The film insert molded article according to (3) above, wherein the active energy ray-curable resin having a (meth)acryloyl group has a (meth)acrylate skeleton.
(5) The film insert molded article according to any one of (1) to (4) above, wherein the indentation hardness of the curable hardcoat layer is 100 $N/mm^2$ or more at 40°C and 10 $N/mm^2$ or more at 80°C, the indentation hardness

being values according to ISO 14577-1.

(6) The film insert molded article according to any one of (1) to (5) above, wherein the curable hardcoat layer contains nanoparticles.

(7) The film insert molded article according to any one of (1) to (6) above, wherein the curable hardcoat layer contains a leveling agent.

(8) The film insert molded article according to any one of (1) to (7) above, wherein the curable hardcoat layer is an active energy ray-curable layer.

(9) A film insert molded article which is obtained by curing the curable hardcoat layer of the film insert molded article according to any one of (1) to (8) above.

(10) A method for manufacturing a film insert molded article, the method comprising:

a shaping step in which a curable insert film is shaped; and
a resin layer forming step in which a molten thermoplastic resin is injected onto a surface of the insert film to form a thermoplastic resin layer,
wherein a curable hardcoat layer of the insert film is in an uncured state.

(11) The method for manufacturing a film insert molded article according to (10) above, wherein, in the resin layer forming step, the temperature of a mold used for injection molding of the thermoplastic resin is 40-80°C.

(12) The method for manufacturing a film insert molded article according to either one of (10) and (11) above, wherein: in the resin layer forming step, the indentation hardness of the curable hardcoat layer is 10 $N/mm^2$ or more at 80°C and 100 $N/mm^2$ or more at 40°C when used for injection molding, the indentation hardness being values according to ISO 14577-1.

(13) The method for manufacturing a film insert molded article according to any one of (10) to (12) above, further comprising a curing step in which the curable hardcoat layer is cured.

(14) A curable insert film, comprising:

a base material layer; and
a curable hardcoat layer layered on the base material layer,
wherein the indentation hardness of the curable hardcoat layer is 100 $N/mm^2$ or more at 40°C and 10 $N/mm^2$ or more at 80°C, the indentation hardness being values according to ISO 14577-1.

(15) The curable insert film according to (14) above, wherein the curable hardcoat layer contains an active energy ray-curable resin having a (meth)acryloyl group.

(16) The curable insert film according to (15) above, wherein the active energy ray-curable resin having a (meth)acryloyl group has a (meth)acrylate skeleton.

(17) The curable insert film according to any one of (14) to (16) above, wherein the curable hardcoat layer contains nanoparticles or a leveling agent.

(18) The curable insert film according to any one of (14) to (17) above, wherein the curable hardcoat layer is an active energy ray-curable layer.

(19) The curable insert film according to any one of (14) to (18) above, further comprising a protective film layered on the hardcoat layer to make contact with the surface of the hardcoat layer on the other side from the base material layer.

ADVANTAGEOUS EFFECT OF THE INVENTION

According to the present invention, a thermoplastic resin can be layered on an insert film which has been shaped into a predetermined shape but whose curable hardcoat layer remains uncured and flexible, thereby preventing cracks and breaks of the insert film.

Furthermore, a molded product with a complex shape can be manufactured easily if an insert film in an uncured state can be used in the molding process.

In addition, excellent chemical resistance and abrasion resistance can be achieved for a film insert molded article whose surface is covered by a cured hardcoat layer if the curable hardcoat layer is formed into a predetermined shape and subjected to molding to form a thermoplastic resin layer before it is cured, for example, with an energy ray.

Moreover, the film insert molded article having the excellent features mentioned above is especially suitable as a part used for mobile devices, automobile interior parts, and other applications.

BRIEF DESCRIPTION OF THE DRAWINGS

Figure 1: A cross-sectional view showing a specific example of a film insert molded article. The structure of a laminate, i.e., a film insert molded body 10, illustrated in Figure 1 is obtained by layering a thermoplastic resin, i.e., a polycarbonate 22, on an insert film consisting of a curable (after-cure) hardcoat layer 12 in an uncured state, a polymethyl methacrylate layer (PMMA resin layer) 16 and a polycarbonate layer (PC resin layer) 20.

EMBODIMENTS FOR CARRYING OUT THE INVENTION

Hereinafter, the present invention will be described in detail. The present invention is not limited to the following embodiment, and may be modified as desired within the scope having the effects of the invention.

The film insert molded article of the present invention has an insert film and a thermoplastic resin layer. Each of these layers will be described below.

[After-Cure Type Insert Film]

An after-cure type, i.e., curable, insert film used in this invention includes at least (a) a base material layer and (b) a curable (after-cure) hardcoat layer, and may consist only of these two layers. Alternatively, the insert film may further have (c) a protective film for protecting the hardcoat layer layered thereon such that it covers the surface of the hardcoat layer on the other side from the base material layer.

The curable hardcoat layer included in the insert film of the present invention has a value of indentation hardness (in accordance with ISO 14577-1) in a given range.

Specifically, the indentation hardness of the curable hardcoat layer at 40°C is 100 $N/mm^2$ or higher, preferably 120 $N/mm^2$ or higher, and more preferably 150 $N/mm^2$ or higher.

Moreover, the indentation hardness of the curable hardcoat layer at 80°C is 10 $N/mm^2$ or higher, preferably 12 $N/mm^2$ or higher, and more preferably 15 $N/mm^2$ or higher.

As described above, a hardcoat layer having the indentation hardness in the predetermined range appropriate for a given temperature is particularly suitable for forming in an uncured state.

Hereinafter, each layer of the after-cure type insert film will be described.

[Base material layer]

The base material layer is preferably layered such that it makes contact with the surface of the hardcoat layer on the other side from the protective film. However, an additional layer may be disposed if necessary between the base material layer and the hardcoat layer.

The base material layer preferably contains a thermoplastic resin. There is no particular limitation on the type of the thermoplastic resin, and various resins including a polycarbonate (PC) resin, an acrylic resin such as polymethyl methacrylate (PMMA), polyethylene terephthalate (PET), triacetyl cellulose (TAC), polyethylene naphthalate (PEN), polyimide (PI), a cyclo-olefin copolymer (COC), a norbomene-containing resin, polyethersulfone, cellophane, an aromatic polyamide, and the like can be used. Among these options, the thermoplastic resin of the base material layer preferably include at least a polycarbonate resin. Furthermore, it is desirable to use an aromatic polycarbonate from the viewpoints of toughness and heat resistance.

The type of a polycarbonate resin contained in the base material layer is not particularly limited as long as it contains a -[O-R-OCO]- unit that contains a carbonate ester bond in the molecular main chain (where R contains an aliphatic group, an aromatic group, or both aliphatic and aromatic groups, and has a linear or branched structure), but it is preferably a polycarbonate having a bisphenol skeleton or the like, and particularly preferably a bisphenol A-type polycarbonate having a bisphenol A skeleton or a bisphenol C-type polycarbonate having a bisphenol C skeleton. A mixture or copolymer of bisphenol A and bisphenol C may also be used as the polycarbonate resin. The hardness of the base material layer can be improved by using a bisphenol C-based polycarbonate resin, for example, a polycarbonate resin composed exclusively of bisphenol C, or a polycarbonate resin of a mixture or copolymer of bisphenol C and bisphenol A.

The viscosity average molecular weight of the thermoplastic resin, i.e., polycarbonate resin, is preferably 15,000-40,000, more preferably 20,000-35,000, and still more preferably 22,500-25,000.

In addition, it is preferable for the base material layer to contain an acrylic resin. Examples of the acrylic resin contained in the base material layer include, but are not particularly limited to, a homopolymer of various (meth)acrylate esters represented by polymethyl methacrylate (PMMA) and methyl methacrylate (MMA), a copolymer of PMMA or MMA with one or more other monomers, and also a mixture of several types of these resins. Among these resins, a (meth)acrylate containing a cyclic alkyl structure is preferable because of its low birefringence, low moisture absorption, and

excellent heat resistance. Examples of such (meth)acrylic resins include, but are not limited to, ACRYPET (manufactured by Mitsubishi Rayon Co., Ltd.), DELPET (manufactured by Asahi Kasei Chemicals), and PARAPET (manufactured by Kuraray Co., Ltd.).

As the base material layer, it is also possible to use a multilayer product that includes a layer of the polycarbonate resin mentioned above and a layer of the acrylic resin mentioned above. Accordingly, in a multilayer product, for example, containing at least two layers, i.e., an acrylic resin layer and an aromatic polycarbonate layer, a hardcoat layer is preferably provided on the acrylic resin side. By using a multilayer product including a polycarbonate resin and an acrylic resin, it is possible to improve the surface hardness while maintaining the thermoformability of the base material.

The base material layer may also contain additives as components other than the thermoplastic resin. Such additives refer to, for example, at least one additive selected from the group consisting of a heat stabilizer, an antioxidant, a flame retardant, a flame retardant aid, a UV absorber, a mold release agent, and a colorant. In addition, an antistatic agent, a fluorescent brightening agent, an antifogging agent, a flow modifier, a plasticizer, a dispersant, an antibacterial agent, or the like may also be added to the base material layer.

In the base material layer, the thermoplastic resin is preferably contained in an amount of 80 mass% or more, more preferably 90 mass% or more, and particularly preferably 95 mass% or more. Furthermore, the thermoplastic resin of the base material layer preferably contains a polycarbonate resin in an amount of 80 mass% or more, more preferably 90 mass% or more, and particularly preferably 95 mass% or more.

The thickness of the base material layer is not limited, but it is preferably 0.10-1.0 mm, more preferably 0.15-0.5 mm, and still more preferably 0.18-0.40 mm (e.g., 0.25-0.3 mm).

[Curable (after-cure) hardcoat layer]

The after-cure hardcoat layer contains a curable resin, preferably an active energy ray-curable resin. Thus, the hardcoat layer, which is energy ray curable, can be cured even if it does not contain a curing agent. However, the hardcoat layer can contain a photoinitiator and various additives to improve the function of the hardcoat layer, which will be described in detail later. Hereinafter, the components that can be contained in a hardcoat composition used as the raw material of the hardcoat layer will be described.

<Curable resin>

An active energy ray-curable resin is preferable as the curable resin contained in the hardcoat composition. As the active energy ray-curable resin, for example, a resin that can be cured by irradiation with an energy ray such as an ultraviolet ray, near-ultraviolet ray, or visible ray can be used. Among these, the active energy ray-curable resin is preferably, but not limited to, a UV-curable resin.

Any compound that is curable with an active energy ray can be used as the active energy ray-curable resin. As a favorable active energy ray-curable compound, a (meth)acrylate compound ((meth)acrylate polymer or (meth)acrylate resin) having a (meth)acryloyl group can be used. A (meth)acrylate compound having a (meth)acryloyl group preferably has a (meth)acrylate skeleton. Examples of the (meth)acrylate compound include an epoxy (meth)acrylate, a urethane (meth)acrylate, and a polyester (meth)acrylate. These active energy ray-curable resins are readily available from various manufacturers.

-Epoxy (meth)acrylate

Among the above-mentioned active energy ray-curable compounds, an epoxy (meth)acrylate derived from an epoxy compound is favorable. One exemplary synthesis of an epoxy (meth)acrylate is represented by Formula (1). An epoxy (meth)acrylate can be obtained by adding an acrylic acid or methacrylic acid having an unsaturated bond to an epoxy compound.

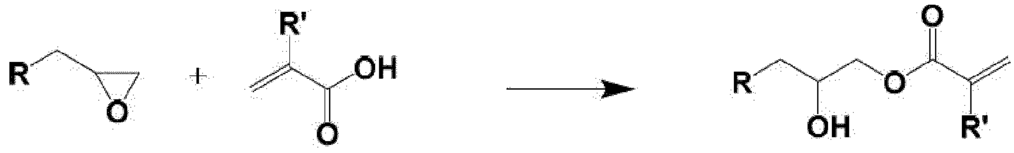

(1)

(In formula (1), R each represent hydrogen or an alkyl group with a total of 1-12 carbon atoms optionally containing at least any substituent from an epoxy group, a hydroxyl group, an acryloyl group, and a methacryloyl group, and R' represents a methyl group or hydrogen).

An epoxy (meth)acrylate having a (meth)acrylate skeleton can be obtained, for example, by copolymerizing a (meth)acrylic acid with a (meth)acrylic acid glycidyl ester to synthesize an epoxy compound having a (meth)acrylate skeleton and then adding an acrylic acid, a methacrylic acid, etc. to it. An example of its synthesis is represented by Formula (2).

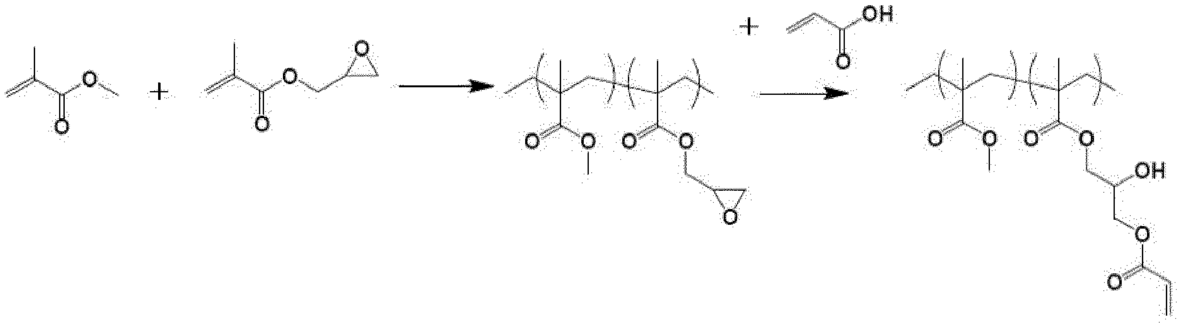

(2)

Examples of the aforementioned epoxy (meth)acrylate that can be contained in the hardcoat layer include those having the repeating unit represented by the following formula (I).

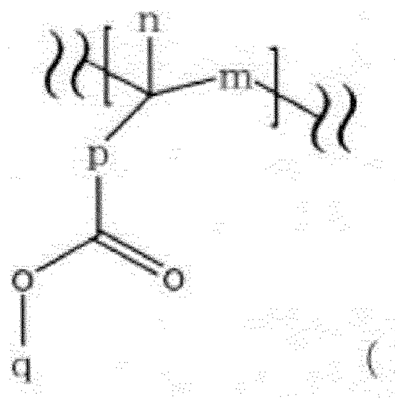

(I)

In Formula (I), m represents an alkylene group with 1-4 carbon atoms or a single bond, n represents an alkyl group with 1-4 carbon atoms or hydrogen, p represents a single bond or an alkylene group with 1 or 2 carbon atoms, and q represents hydrogen or an alkyl group with a total of 1-12 carbon atoms optionally containing at least any substituent from an epoxy group, a hydroxyl group, an acryloyl group, and a methacryloyl group.

More preferably, the epoxy (meth)acrylate polymer contains the following repeating unit, i.e., a repeating unit represented by formula (I) above, wherein m is an alkylene group with 1 or 2 carbon atoms, n is an alkyl group with 1 or 2 carbon atoms, p is a single bond or a methylene group, q is hydrogen or an alkyl group with a total of 1-6 carbon atoms optionally containing at least any substituent from a glycidyl group, a hydroxyl group, and an acryloyl group.

For example, in the above formula (I), m is a methylene group, n is a methyl group, p is a single bond, and q is an alkyl group with 5 or less carbon atoms containing a methyl group and a glycidyl group (epoxy group), an alkyl group with 8 or less carbon atoms containing a hydroxyl group and an acryloyl group, or the like.

Specific examples of the repeating unit contained in the epoxy (meth)acrylate polymer include those represented by formulae (II-a), (II-b), and (II-c) below.

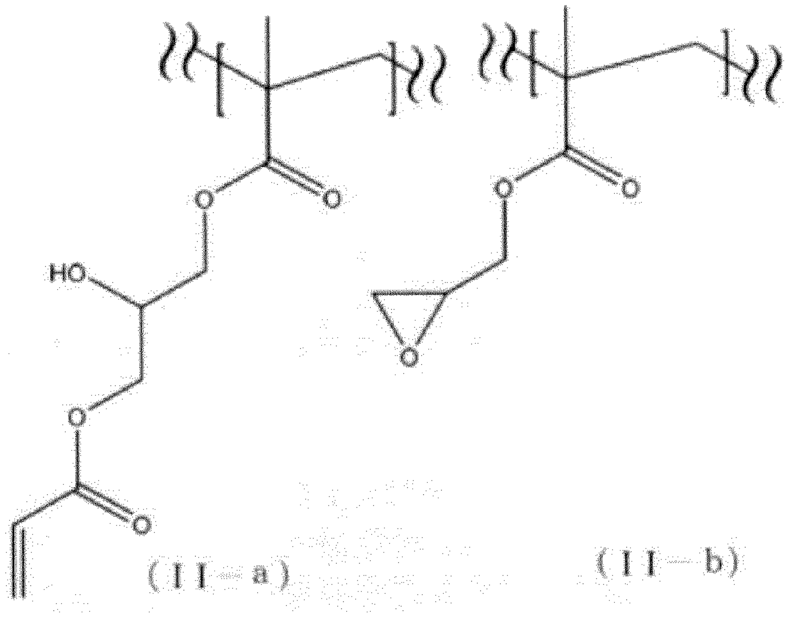

(II-a) (II-b)

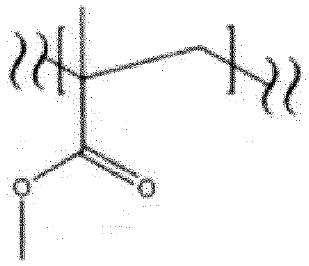

(II-c)

The content of the repeating unit represented by formula (II-a) above in the (meth)acrylate polymer is preferably 30-85 mol% and more preferably 40-80 mol% relative to the total number of moles of the repeating units represented by formulae (II-a), (II-b), and (II-c) above. The content of the repeating units represented by formula (II-b) above is preferably 5-30 mol% and more preferably 10-25 mol% relative to the aforementioned total number of moles. The content of the repeating unit represented by formula (II-c) above is preferably 10-40 mol% and more preferably 10-35 mol% relative to the aforementioned total number of moles.

The mole ratio of the repeating unit represented by formula (II-a) above, the repeating unit represented by formula (II-b) above, and the repeating unit represented by formula (II-c) above is preferably 4.5-5.5:1.5-2.5:2.5-3.5, for example 5:2:3.

-Urethane (meth)acrylate

As mentioned above, the following urethane (meth)acrylates can also be used as the active energy ray-curable resin having a (meth)acryloyl group.

(Urethane acrylate containing cyclic skeleton molecular structure)

The urethane acrylate resin is preferably a urethane acrylate containing a cyclic skeleton molecular structure. More specifically, a specific example of a preferable urethane acrylate is a polymer of an isocyanate compound and an acrylate compound having a cyclic skeleton. Urethane acrylate resins that may have a cyclic skeleton molecular structure are preferably curable with an active energy ray.

Isocyanate compound

As the isocyanate compound, for example, an aromatic isocyanate which may optionally have a substituent, that is, an alkyl group such as a methyl group, can be used, where it is preferably an aromatic isocyanate with a total of 6-16 carbon atoms, more preferably an aromatic isocyanate with 7-14 carbon atoms, and particularly preferably an aromatic isocyanate with 8-12 carbon atoms.

Although an aromatic isocyanate is preferable as the above-described isocyanate, an aliphatic or alicyclic isocyanate, or the like can also be used.

Examples of a preferable structural unit of the urethane (meth)acrylate include polyisocyanates such as tolylene diisocyanate, diphenylmethane diisocyanate, hydrogenated diphenylmethane diisocyanate, polyphenylmethane polyisocyanate, modified diphenylmethane diisocyanate, hydrogenated xylylene diisocyanate, xylylene diisocyanate, hexamethylene diisocyanate, trimethylhexamethylene diisocyanate, tetramethylxylylene diisocyanate, isophorone diisocyanate, norbornene diisocyanate, 1,3-bis(isocyanatomethyl)cyclohexane, phenylene diisocyanate, lysine diisocyanate, lysine triisocyanate, and naphthalene diisocyanate, trimer or tetramer compounds of these polyisocyanates, biuret type polyisocyanates, water dispersible polyisocyanates (e.g., "AQUANATE 100," "AQUANATE 110," "AQUANATE 200,"

and "AQUANATE 210" manufactured by Nippon Polyurethane Industry Co., Ltd.), and reaction products of these polyisocyanates and polyols.

Among these isocyanate compounds, specific examples of preferable isocyanate compounds include diphenylmethane diisocyanate, toluene diisocyanate, naphthalene diisocyanate, a trimethylolpropane (TMP) adduct of toluene diisocyanate, an isocyanate of toluene diisocyanate, a TMP adduct of xylene diisocyanate, as well as dicyclohexylmethane diisocyanate (H12MDI), isophorone diisocyanate (IPDI), and xylene diisocyanate (XDI) which are represented by the following formulae.

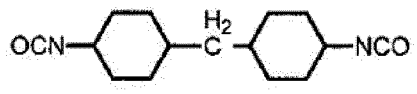

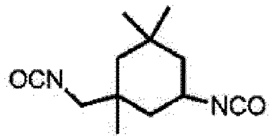

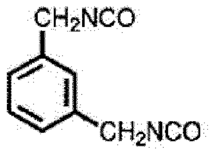

Acrylate compound

Examples of the acrylate compound mentioned above, i.e., an acrylate compound used for forming the urethane acrylate containing a cyclic skeleton molecular structure, include pentaerythritol triacrylate (PETA), dipentaerythritol pentaacrylate (DPPA), and hydroxypropyl (meth)acrylate (hydroxypropyl acrylate: HPA).

Moreover, a compound having a (meth)acryloyloxy group and a hydroxy group, for example, a monofunctional (meth)acrylic compound having a hydroxyl group, can also be used as the acrylate compound.

Examples of the monofunctional (meth)acrylic compound having a hydroxyl group include mono(meth)acrylates containing a hydroxyl group {for example, hydroxyalkyl (meth)acrylates [e.g., hydroxy C2-20 alkyl-(meth)acrylates such as 2-hydroxyethyl (meth)acrylate, 3-hydroxypropyl (meth)acrylate, and 6-hydroxyhexyl (meth)acrylate, preferably hydroxy C2-12 alkyl-(meth)acrylates, and more preferably hydroxy C2-6 alkyl-(meth)acrylates], polyalkylene glycol mono(meth)acrylates [e.g., poly-C2-4 alkylene glycol mono(meth)acrylates such as diethylene glycol mono(meth)acrylate, and polyethylene glycol mono(meth)acrylate)], mono(meth)acrylates of polyols having 3 or more hydroxyl groups [e.g. mono(meth)acrylates of alkane polyols such as glycerol mono(meth)acrylate and trimethylolpropane mono(meth)acrylate, and mono(meth)acrylates of multimers of alkane polyols such as diglycerol mono(meth)acrylate], etc.}, N-hydroxyalkyl (meth)acrylamides (for example, N-hydroxy C1-4 alkyl (meth)acrylamides such as N-methylol (meth)acrylamide and N-(2-hydroxyethyl) (meth)acrylamide), and adducts having a lactone (e.g., a C4-10 lactone such as ε-caprolactone) added to the hydroxyl group of these compounds (e.g., hydroxyalkyl (meth)acrylates) (for example, adducts having 1-5 moles of lactone added).

These (meth)acrylic compounds may be used alone or in combination of two or more.

A specific example of a preferable compound used for forming an alkyl group containing a (meth)acryloyloxy group is 2-hydroxy-3-phenoxypropyl acrylate.

Among the acrylate compounds mentioned above, specific examples of particularly preferable acrylate compounds include pentaerythritol triacrylate (PETA), dipentaerythritol pentaacrylate (DPPA), and hydroxypropyl (meth)acrylate (hydroxypropyl acrylate: HPA).

Polymer of isocyanate compound and acrylate compound

Specific examples of a preferable polymer of an isocyanate compound and an acrylate compound mentioned above, i.e., a preferable urethane acrylate polymer, include a polymer of xylylene diisocyanate (XDI) and pentaerythritol triacrylate (PETA), a polymer of XDI and dipentaerythritol pentaacrylate (DPPA), a polymer of dicyclohexylmethane diisocyanate (H12MDI) and PETA, a polymer of isophorone diisocyanate (IPDI) and PETA, and a polymer of XDI and hydroxypropyl (meth)acrylate (HPA).

In addition to the isocyanate and acrylate compounds mentioned above, examples of a urethane acrylate containing a cyclic skeleton also include a polymer containing a polyol compound as a structural unit. Polyol compounds (polyhydric alcohols) are compounds having two or more hydroxyl groups in one molecule. Specifically, examples of the polyol compounds include: dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, and neopentyl glycol hydroxypivalate; polylactone diols having a lactone such as ε-caprolactone added to these dihydric alcohols; ester diols such as bis(hydroxyethyl)terephthalate; polyether diols such as alkylene oxide adducts of bisphenol A, polyethylene glycol, polypropylene glycol, and polybutylene glycol; α-olefin epoxides such as propylene oxide and butylene oxide, monoepoxy compounds such as Cardura E10 [trade name of glycidyl ester of synthetic highly branched saturated fatty acid manufactured by Shell Kagaku]; trihydric or higher alcohols such as glycerol, trimethylolpropane, trimethylolethane, diglycerol, triglycerol, 1,2,6-hexanetriol, pentaerythritol, dipentaerythritol, sorbitol, and mannitol; polylactone polyols having a lactone such as ε-caprolactone added to these trihydric or higher alcohols; and alicyclic polyhydric alcohols such as 1,4-cyclohexane dimethanol, tricyclodecane dimethanol, hydrogenated bisphenol A, hydrogenated bisphenol F, hydrogenated bisphenol A, and hydrogenated bisphenol F.

Examples of the aforementioned polyol compound include urethane acrylates which contain tricyclodecane dimethanol (TCDDM) represented by the following formula, or the like as a structural unit.

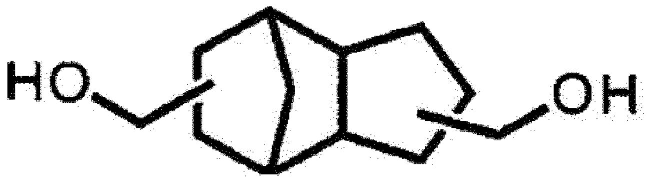

Specific examples of a preferable urethane acrylate polymer mentioned above include a polymer of tricyclodecane dimethanol (TCDDM), IPDI, and PETA, a polymer of TCDDM, H12MDI, and PETA, a polymer of any of these polymers that contain DPPA instead of or together with PETA as a structural unit, and a polymer of xylylene diisocyanate (XDI) and hydroxypropyl (meth)acrylate (HPA).

(Urethane acrylate containing predetermined structural units)

Specific examples of a preferable urethane acrylate resin also include a urethane acrylate resin having a structural unit derived from an isocyanate and a structural unit derived from a compound having a (meth)acryloyloxy group and a hydroxy group as described below.

Examples of preferable structural units of the aforementioned urethane (meth)acrylate include the following.

Isocyanate compound

As the isocyanate compound forming the aforementioned structural unit, for example, an aromatic isocyanate which may optionally have a substituent, i.e., an alkyl group such as a methyl group, can be used, where it is preferably an aromatic isocyanate with a total of 6-16 carbon atoms, more preferably an aromatic isocyanate with 7-14 carbon atoms, and particularly preferably an aromatic isocyanate with 8-12 carbon atoms.

The isocyanates mentioned above are preferably those having a cyclic skeleton. Accordingly, although aromatic isocyanates and alicyclic isocyanates (alicyclic-based isocyanates) are specific examples of the preferable isocyanates mentioned above, it is also possible to use aliphatic isocyanates that do not have a cyclic skeleton (acyclic aliphatic isocyanates).

Examples of a compound forming a preferable structural unit of the urethane (meth)acrylate include polyisocyanates such as tolylene diisocyanate, diphenylmethane diisocyanate, hydrogenated diphenylmethane diisocyanate, polyphenylmethane polyisocyanate, modified diphenylmethane diisocyanate, hydrogenated xylylene diisocyanate, xylylene diisocyanate, hexamethylene diisocyanate, trimethylhexamethylene diisocyanate, tetramethylxylylene diisocyanate, isophorone diisocyanate, norbornene diisocyanate, 1,3-bis(isocyanatomethyl)cyclohexane, phenylene diisocyanate, lysine diisocyanate, lysine triisocyanate, and naphthalene diisocyanate, trimer or tetramer compounds of these polyisocyanates, biuret polyisocyanates, water dispersible polyisocyanates (e.g., "AQUANATE 100," "AQUANATE 110," "AQUANATE 200," and "AQUANATE 210" manufactured by Nippon Polyurethane Industry Co., Ltd.), and reaction products of these polyisocyanates and polyols.

Among these isocyanates, diphenylmethane diisocyanate, toluene diisocyanate, naphthalene diisocyanate, a trimethylolpropane (TMP) adduct of toluene diisocyanate, an isocyanate of toluene diisocyanate, a TMP adduct of xylene diisocyanate, and the like are favorable.

Compound having (meth)acryloyloxy group and hydroxy group

Specific examples of preferable compounds having a (meth)acryloyloxy group and a hydroxy group, which are used to form the above-mentioned structural unit, include monofunctional (meth)acrylic compounds having a hydroxyl group.

Examples of the monofunctional (meth)acrylic compound having a hydroxyl group include mono(meth)acrylates containing a hydroxyl group {for example, hydroxyalkyl (meth)acrylates [e.g., hydroxy C2-20 alkyl-(meth)acrylates such as 2-hydroxyethyl (meth)acrylate, 3-hydroxypropyl (meth)acrylate, and 6-hydroxyhexyl (meth)acrylate, preferably hydroxy C2-12 alkyl-(meth)acrylates, and more preferably hydroxy C2-6 alkyl-(meth)acrylates], polyalkylene glycol mono(meth)acrylates [e.g., poly-C2-4 alkylene glycol mono(meth)acrylates such as diethylene glycol mono(meth)acrylate, and polyethylene glycol mono(meth)acrylate)], mono(meth)acrylates of polyols having 3 or more hydroxyl groups [e.g. mono(meth)acrylates of alkane polyols such as glycerol mono(meth)acrylate and trimethylolpropane mono(meth)acrylate, and mono(meth)acrylates of multimers of alkane polyols such as diglycerol mono(meth)acrylate], etc.}, N-hydroxyalkyl (meth)acrylamides (for example, N-hydroxy C1-4 alkyl (meth)acrylamides such as N-methylol (meth)acrylamide and N-(2-hydroxyethyl) (meth)acrylamide), and adducts having a lactone (e.g., a C4-10 lactone such as ε-caprolactone) added to the hydroxyl group of these compounds (e.g., hydroxyalkyl (meth)acrylates) (for example, adducts having 1-5 moles of lactone added)

These (meth)acrylic compounds may be used alone or in combination of two or more.

A specific example of a preferable compound for forming an alkyl group (A3) containing a (meth)acryloyloxy group is 2-hydroxy-3-phenoxypropyl acrylate.

The above urethane (meth)acrylate containing predetermined structural units may also be a polymer containing a polyol compound as a structural unit in addition to the isocyanate compound and the compound having (meth)acryloyloxy and hydroxy groups.

Polyol compounds (polyhydric alcohols) are compounds having two or more hydroxyl groups in one molecule. Specifically, examples of the polyol compounds include: dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, and neopentyl glycol hydroxypivalate; polylactone diols having a lactone such as ε-caprolactone added to these dihydric alcohols; ester diols such as bis(hydroxyethyl)terephthalate; polyether diols such as alkylene oxide adducts of bisphenol A, polyethylene glycol, polypropylene glycol, and polybutylene glycol; α-olefin epoxides such as propylene oxide and butylene oxide, monoepoxy compounds such as Cardura E10 [trade name of glycidyl ester of synthetic highly branched saturated fatty acid manufactured by Shell Kagaku]; trihydric or higher alcohols such as glycerol, trimethylolpropane, trimethylolethane, diglycerol, triglycerol, 1,2,6-hexanetriol, pentaerythritol, dipentaerythritol, sorbitol, and mannitol; polylactone polyols having a lactone such as ε-caprolactone added to these trihydric or higher alcohols; and alicyclic polyhydric alcohols such as 1,4-cyclohexane dimethanol, tricyclodecane dimethanol, hydrogenated bisphenol A, hydrogenated bisphenol F, hydrogenated bisphenol A, and hydrogenated bisphenol F.

The urethane (meth)acrylate containing a polyol compound as a structural unit preferably comprises, in addition to an isocyanate compound and a compound having (meth)acryloyloxy and hydroxy groups, at least a component represented by the following formula (III).

(A3)-O(OC)HN-A2-HN(OC)-O-A1-O-(CO)NH-A2-NH-(CO)O-(A3) ...(III)

(In formula (III),

A1 is an alkylene group derived from the aforementioned polyol compound;
A2 are each independently an alkylene group derived from the aforementioned isocyanate compound; and
A3 are each independently an alkyl group derived from the aforementioned compound having (meth)acryloyloxy and hydroxy groups.

Specific examples of a preferable urethane (meth)acrylate contained in the above-described resin material include the following compounds containing structural units derived from ethylene glycol, pentaerythritol triacrylate, and isophorone diisocyanate. In the following formula, the value of n is 0-10, preferably 1-5, and more preferably 1-3.

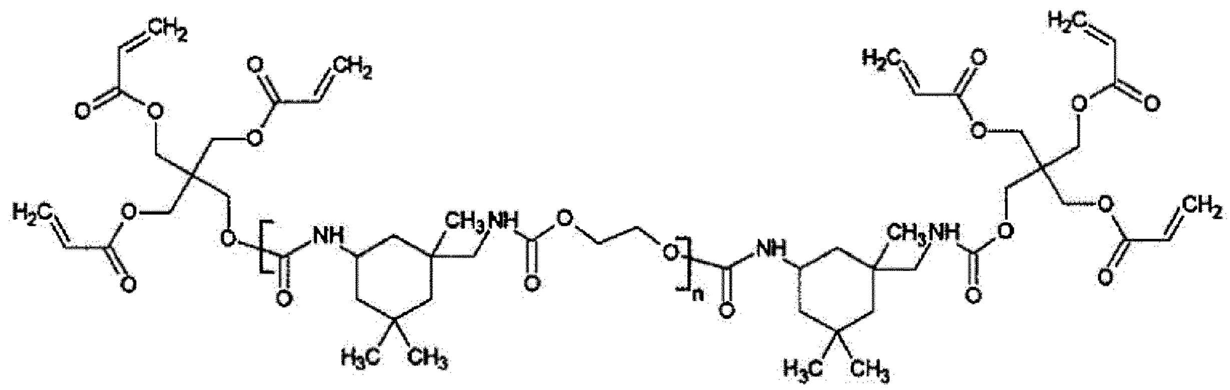

In the urethane acrylate resin, the ratio of a compound having (meta)acryloyloxy and hydroxy groups or a structural unit derived from such a compound to isocyanate or a structural unit derived from isocyanate is preferably 99:1 to 30:70 (weight ratio), more preferably 97:3 to 60:40, and still more preferably 95:5 to 80:20.

(Urethane acrylate containing acrylate)

Specific examples of a preferable urethane acrylate resin include those containing a urethane acrylate and an acrylate. Specific examples of a more preferable urethane acrylate resin include those containing a mixture of a hexafunctional urethane acrylate and a bifunctional acrylate.

(Hexafunctional) urethane acrylate

As described above, the urethane acrylate resin preferably contains a urethane acrylate, especially a hexafunctional urethane acrylate.

Examples of a preferable compound of a hexafunctional urethane acrylate include those represented by the formulae below, namely, a polymer of dicyclohexylmethane diisocyanate (H12MDI) and pentaerythritol triacrylate (PETA), and a polymer of isophorone diisocyanate (IPDI) and PETA. Specific examples of preferred products of these hexafunctional urethane acrylates include UN-3320HC (polymer of H12MDI and PETA: manufactured by Negami Chemical Industrial Co., Ltd.), CN-968 (polymer of IPDI and PETA: manufactured by Sartomer Japan Inc.) and CN-975 (manufactured by Sartomer Japan Inc.).

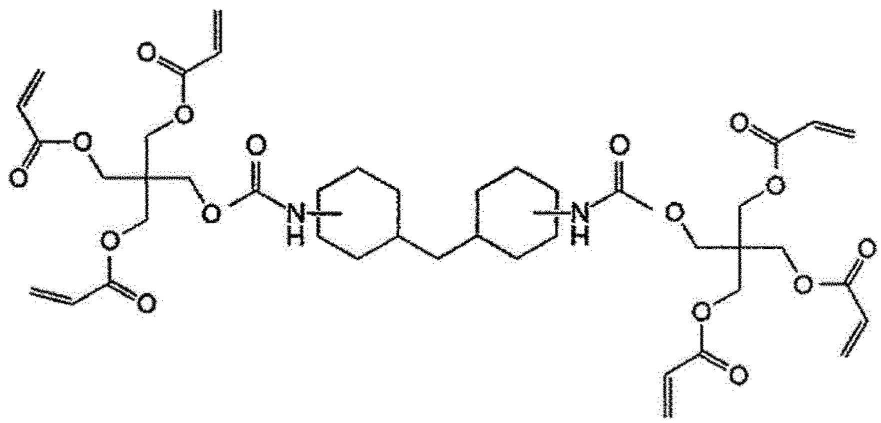

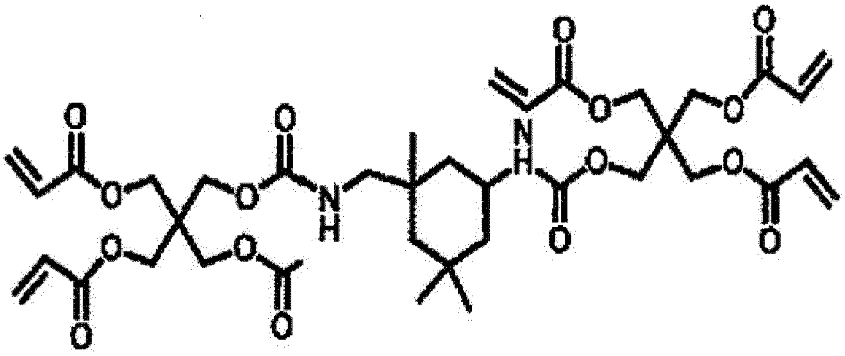

(Meth)acrylate (bifunctional (meth)acrylate, etc.)

As mentioned above, a (meth)acrylate that is preferred to be contained in the urethane acrylate resin is preferably an optionally substituted compound having 4-20 carbon atoms, which contains at least one (meth)acryloyloxy group and at least one vinyl ether group. The number of carbon atoms in the (meth)acrylate is preferably 6-18, and more preferably 8-16. Examples of the substituents of the (meth)acrylate include an alkyl group.
Furthermore, the (meth)acrylate is preferably bifunctional.
For example, 2-(2-vinyloxyethoxy)ethyl (meth)acrylate [2-(2-vinyloxyethoxy)ethyl acrylate: VEEA] represented by the following formula can favorably be used as the (meth)acrylate.

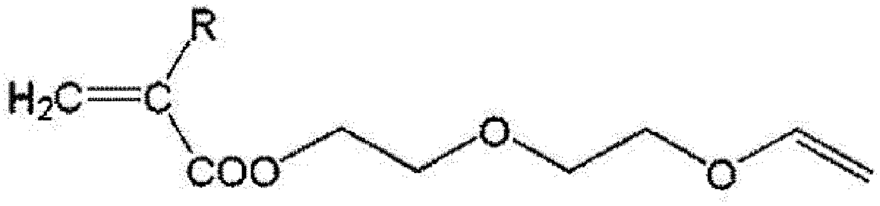

(In the above formula, R is hydrogen or a methyl group.)
In the urethane acrylate resin, the ratio of the urethane acrylate to the (meth)acrylate is preferably 99:1 to 30:70 (weight ratio), more preferably 97:3 to 60:40, and still more preferably 95:5 to 80:20.

(Fluorine-containing urethane acrylate)

A fluorine-containing urethane acrylate may be used as the (meth)acrylate polymer. The fluorine-containing urethane acrylate preferably contains at least a component represented by the following formula (IV).

(A3)-O(OC)HN-A2-HN(OC)-O-A1-O-(CO)NH-A2-NH-(CO)O-(A3)... (IV)

In the above formula (IV), A1 is preferably an optionally substituted alkylene group derived from a fluorine-containing diol having a total of 8 or less carbon atoms, where the total number of carbon atoms is preferably 6 or less, for example, 4. Examples of the substituent contained in the alkylene group of A1 include an alkyl group.
In formula (IV) above, A2 are each independently an optionally substituted alkylene group derived from an aliphatic or alicyclic isocyanate having a total of 4-20 carbon atoms. The number of carbon atoms of A2 is preferably 6-16, and more preferably 8-12. Examples of the substituent in the alkylene group of A2 include an alkyl group.
Moreover, the alicyclic isocyanate that forms A2 may be, for example, isophorone diisocyanate represented by the following formula.

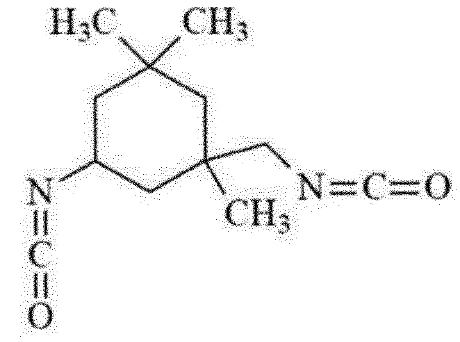

In formula (IV) above, A3 are each independently an optionally substituted alkyl group having a total of 4-30 carbon atoms, which contains at least one (meth)acryloyloxy group. The number of total carbon atoms of A3 is preferably 6-20, and more preferably 8-16. Examples of the substituent in the alkyl groups of A3 include a branched alkyl group. A3 preferably contains at least two (meth)acryloyloxy groups, for example, three (meth)acryloyloxy groups.

Moreover, as a compound for forming A3, for example, pentaerythritol triacrylate represented by the following formula can be used.

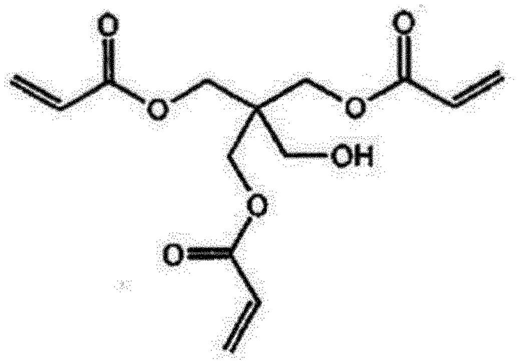

The fluorine-containing urethane acrylate is formed from the above-mentioned compound and include, for example, a compound represented by the following formula (V).

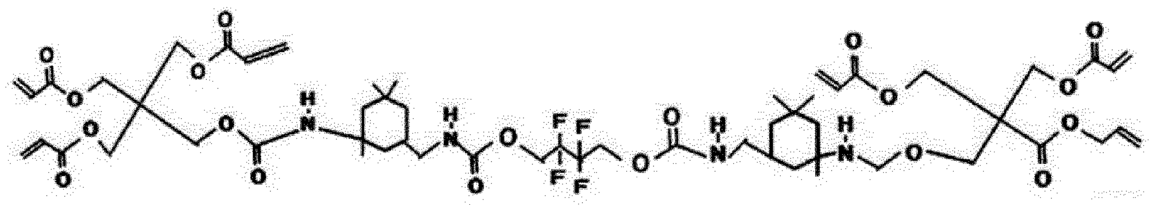

(V)

-Polyester (meth)acrylate

As the (meth)acrylate compound having a (meth)acryloyl group, the aforementioned polyester (meth)acrylate can also be used.

Examples of the polyester (meth)acrylate include a polymer (resin) obtained through dehydration-condensation reaction between (meth)acrylic acid, polybasic carboxylic acid (anhydride), and polyol. Examples of a polybasic carboxylic acid (anhydride) used in such dehydration-condensation reaction include succinic acid (anhydride), adipic acid, maleic acid (anhydride), itaconic acid (anhydride), trimellitic acid (anhydride), pyromellitic acid (anhydride), hexahydrophthalic acid (anhydride), phthalic acid (anhydride), isophthalic acid, and terephthalic acid. In addition, examples of polyol used in such dehydration-condensation reaction include 1,4-butanediol, 1,6-hexanediol, diethylene glycol, triethylene glycol, propylene glycol, neopentyl glycol, dimethylol heptane, dimethylol propionic acid, dimethylol butanoic acid, trimethylolpropane, ditrimethylol propane, pentaerythritol, and dipentaerythritol.

Specific examples of the polyester (meth)acrylate include Aronix M-6100, Aronix M-7100, Aronix M-8030, Aronix

M-8060, Aronix M-8530, and Aronix M-8050 (all trade names of polyester (meth)acrylate-based oligomers manufactured by TOAGOSEI Co., Ltd.), Laromer PE44F, Laromer LR8907, Laromer PE55F, Laromer PE46T, and Laromer LR8800 (all trade names of polyester (meth)acrylate-based oligomers manufactured by BASF), Ebecryl 80, Ebecryl 657, Ebecryl 800, Ebecryl 450, Ebecryl 1830, and Ebecryl 584 (all trade names of polyester (meth)acrylate-based oligomers manufactured by Daicel-UCB Co., Ltd.), and Photomer RCC13-429 and Photomer 5018 (all trade names of polyester (meth)acrylate-based oligomers manufactured by San Nopco Limited).

The (meth)acrylate polymer as an active energy ray-curable resin preferably has a (meth)acrylic equivalent weight of 200-500 g/eq. The (meth)acryl equivalent weight of the (meth)acryloyl polymer is preferably 220-450 g/eq. and more preferably 250-400 g/eq.

The (meth)acrylate polymer as an active energy ray-curable resin preferably has a weight average molecular weight of 5,000-200,000. The weight average molecular weight of the (meth)acrylate polymer is preferably 10,000-150,000, more preferably 15,000-100,000, and still more preferably 20,000-50,000.

The weight average molecular weight can be measured based on the description in paragraphs 0061-0064 of Japanese Unexamined Patent Application Publication No. 2007-179018. Details of the measurement method are given below.

[Table 1]

| Conditions for measuring weight average molecular weight (Mw) | |
|---|---|
| Apparatus | "Aliance" manufactured by Waters Corporation |
| Columns | " Shodex K-805L " manufactured by Showa Denko K.K. (2 columns) |
| Detector | UV Detector: 254 nm |
| Eluent | Chloroform |

Specifically, first, a calibration curve showing the relationship between the elution time and the molecular weight of polycarbonate is prepared by the universal calibration method using polystyrene as the standard polymer. Then, the elution curve (chromatogram) of polycarbonate is measured under the same conditions as those used for the calibration curve described above. Furthermore, the weight average molecular weight (Mw) is calculated from the elution time (molecular weight) of the polycarbonate and the peak area (number of molecules) of the elution time. The weight average molecular weight is expressed by the following equation (A), where Ni represents the number of molecules having molecular weight Mi.

$$Mw = \Sigma(NiMi^2)/\Sigma(NiMi)...(A)$$

Herein, (meth)acrylic includes both acrylic and methacrylic.

As described above, a hardcoat composition containing a (meth)acrylate polymer having a (meth)acrylate equivalent weight and weight average molecular weight in given ranges has a good tack-free property before curing and good scratch resistance after curing, and also allows the curing and polymerization reaction to proceed easily. In other words, a (meth)acrylate compound (polymer) having a (meth)acryloyl group can be used in a hardcoat composition so as to give a good tack-free property (anti-stickiness) and to suppress deterioration of appearance even when thermoforming is performed with a protective film attached thereto. Such polymer (meth)acrylate compounds having a (meth)acryloyl group are commercially available and readily accessible. For example, they are available from DIC Corporation, Kyoeisha Chemical Co., Ltd., DSP Gokyo Food & Chemical Co., Ltd., and else.

- Other active energy ray-curable resins

(Meth)acrylate compounds ((meth)acrylate polymers and resins) other than those described above, such as (meth)acrylate compounds that do not contain a (meth)acryloyl group or that do not contain a (meth)acrylate skeleton, can also be used as active energy ray-curable resins.

In addition, compounds other than (meth)acrylate compounds, for example, epoxy compounds and oxetane compounds can also be used as active energy ray-curable resins.

Furthermore, one or more types of active energy ray-curable resins may be used in the hardcoat composition. The content of the active energy ray-curable resin (monomers as an active energy ray-curable compound) in the hardcoat composition is preferably 40 wt% or more, more preferably 50 wt% or more, still more preferably 60 wt% or more and, for example, 70 wt% or more or 80 wt% or more, relative to the total weight of the hardcoat composition. In addition, the

content of the active energy ray-curable resin in the hardcoat composition is preferably 80 wt% or less, more preferably 70 wt% or less, still more preferably 60 wt% or less, and, for example, 50 wt% or less or 40 wt% or less.

(Polyfunctional acrylate compound)

For example, a pentaerythritol-based polyfunctional acrylate compound may be added to the (meth)acrylate compound. Examples of the polyfunctional acrylate compound having multiple acrylate groups, preferably three or more acrylate groups, include pentaerythritol tetraacrylate and dipentaerythritol hexaacrylate, which are represented by formulae (3) and (4) below, respectively, as well as pentaerythritol triacrylate.

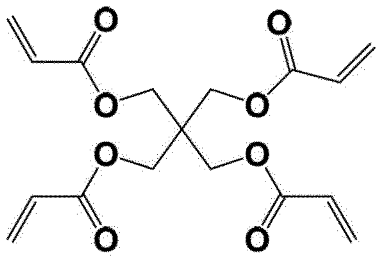
(3)
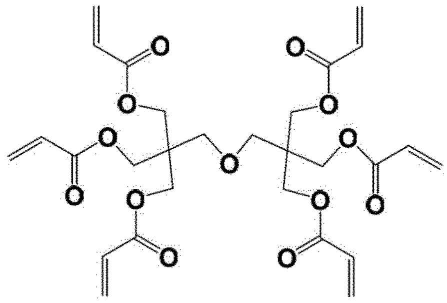
(4)

The polyfunctional acrylate compound is preferably contained in an amount of less than 70 wt%, more preferably less than 50 wt%, and still more preferably less than 30 wt%, relative to the total weight of the (meth)acrylate compound. Thus, by adding a polyfunctional acrylate compound to the hardcoat composition to allow it to react with an acryloyl group, glycidyl group (epoxy group), hydroxyl group, etc. contained in the side chains of the (meth)acrylate polymer, a hardcoat layer having higher scratch resistance can be formed.

<Polymerization inhibitor>

The hardcoat composition that forms the hardcoat layer may contain a polymerization inhibitor. A polymerization inhibitor inhibits polymerization of active energy ray-curable resins by light and heat, thereby improving the storage stability.

As a polymerization inhibitor used in the after-cure hardcoat layer, a hydroxyaromatic compound, a quinone-based compound, a nitrogen-containing compound, a sulfur-containing compound, or the like can be used, as described below.

Examples of the hydroxyaromatic compound include phenols such as hydroquinone and p-methoxyphenol (4-methoxyphenol), cresol, t-butylcatechol, di(t-butyl)hydroxytoluenes such as 3,5-di-t-butyl-4-hydroxytoluene, 2,2'-methylenebis(4-methyl-6-t-butylphenol), 2,2'-methylenebis(4-ethyl-6-butylphenol), and 4,4'-thiobis(3-methyl-6-t-butylphenol).

Examples of the quinone compound include benzoquinone, naphthoquinone, 2-t-butyl 1,4-benzoquinone, and 2-hydroxynaphthoquinone.

As the nitrogen-containing compounds, amine-based compounds and nitroso compounds are known. Examples of the amine-based compound include p-phenylenediamine, 4-aminodiphenylamine, N,N'-diphenyl-p-phenylenediamine, N-isopropyl-N'-phenyl-p-phenylenediamine, N-(1,3-dimethylbutyl)-N'-phenyl-p-phenylenediamine, N,N'-di-2-naphthyl-p-phenylenediamine, diphenylamine, N-phenyl-β-naphthylamine, 4,4'-dicumyl-diphenylamine, 4,4'-dioctyldiphenylamine, and 6-ethoxy-2,2,4 trimethyl-1,2-dihydroquinoline. Examples of the nitroso compound include N-nitrosodiphenylamine, N-nitrosophenylnaphthylamine, N-nitrosodinaphthylamine, p-nitrosophenol, nitrosobenzene, p-nitrosodiphenylamine, and α-nitroso-β-naphthol. Furthermore, examples of nitrogen-containing compounds other than those mentioned above include nitroxides such as piperidine-1-oxyl, pyrrolidine-1-oxyl, 2,2,6,6-tetramethyl-4-oxopiperidine-1-oxyl, and 2,2,6,6-tetramethylpiperidine-1-oxyl. These nitrogen-containing compounds act as radical scavengers.

Examples of the sulfur-based compound include phenothiazine, distearylthiodipropionate, and 2-mercaptobenzoimidazole.

Examples of other polymerization inhibitors include transition metal salts such as copper salt compounds and manganese salt compounds. Examples of such compounds include copper salts such as copper dialkyl dithiocarbamate (in which alkyl groups are any of methyl, ethyl, propyl, and butyl groups, which may be the same or different), copper acetate, copper salicylate, copper thiocyanate, copper nitrate, copper chloride, copper carbonate, copper hydroxide, and copper acrylate; and manganese salts such as manganese dialkyl dithiocarbamate (in which alkyl groups are any of methyl, ethyl, propyl, and butyl groups, which may be the same or different), manganese diphenyldithiocarbamate,

manganese formate, manganese acetate, manganese octanoate, manganese naphthenate, manganese permanganate, and ethylenediaminetetraacetic acid.

Among these polymerization inhibitors, quinone-based compounds, nitrogen-containing compounds, and sulfur-based compounds are preferable.

Furthermore, as the polymerization inhibitor, it is desirable to use phenothiazine, 2-hydroxynaphthoquinone, N-isopropyl-N'-phenyl-p-phenylenediamine, 6-ethoxy-2,2,4 trimethyl-1,2-dihydroquinoline, 2,2,6,6-tetramethyl-4-oxopiperidine-1-oxyl, 2-mercapto-benzoimidazole, or the like, and particularly desirable to use phenothiazine, N-isopropyl-N'-phenyl-p-phenylenediamine, 2,2,6,6-tetramethyl-4-oxopiperidine-1-oxyl, or the like.

The amount of the polymerization inhibitor added is preferably 0.0001-5 wt%, more preferably 0.0003-1 wt%, still more preferably 0.0005-0.5 wt%, and particularly preferably 0.001-0.1 wt% (10-1000 ppm by weight), relative to the total weight of the hardcoat composition forming the hardcoat layer. Addition of the polymerization inhibitor in an excessive amount may adversely affect the physical properties of the hardcoat layer or may cause coloration. On the other hand, if the amount of the polymerization inhibitor added is too small, curing of the hardcoat layer may progress during heating and may not be able to prevent deterioration of thermoformability.

(Nanoparticles)

In order to impart scratch resistance and hardness to the hardcoat layer, nanoparticles can be added to the hardcoat composition. Nanoparticles can be either inorganic or organic, but preferably inorganic. For example, metal oxide nanoparticles such as nano-silica, nano-alumina, nano-titania, or nano-zirconia are used. Nano-diamond or the like may also be used.

Silica particles are preferably contained as inorganic nanoparticles in the hardcoat composition. The nanoparticles contained in the hardcoat are preferably treated with a surface treatment agent. The surface treatment allows the inorganic nanoparticles to be dispersed in a stable state in the hardcoat composition, especially in the (meth)acrylate resin ((meth)acrylate polymer).

As the surface treatment agent used for nanoparticles, for example, inorganic nanoparticles, a compound having a substituent that can bind to the surface of the nanoparticles and a substituent that is highly compatible with the component, especially the (meth)acryloyl polymer of the hardcoat composition, in which the nanoparticles are to be dispersed, is suitable for use. For example, a silane compound, an alcohol, an amine, carboxylic acid, sulfonic acid, phosphonic acid, or the like can be used as the surface treatment agent.

Inorganic nanoparticles preferably have a copolymerizable group on their surface. A copolymerizable group can be introduced by a surface treatment of the inorganic nanoparticles. Examples of the copolymerizable group include a vinyl group, a meth(acrylic) group, and a free radical polymerizable group.

The average particle size of the nanoparticles is preferably 5-500 nm, more preferably 10-300 nm, and still more preferably 20-100 nm. The average particle size of the nanoparticles is measured according to the particle size measurement method employing dynamic light scattering using, for example, Zetasizer Nano ZS from Malvern Panalytical Ltd..

The hardcoat composition preferably contains 20-80 wt% nanoparticles (e.g., inorganic nanoparticles) relative to the total weight of the hardcoat composition. More preferably, the hardcoat composition contains 30-70 wt% inorganic nanoparticles, and still more preferably 40-60 wt% inorganic nanoparticles. A preferred range of the inorganic nanoparticle (nanoparticle) content in the hardcoat composition may also be 30-60 wt%.

(Leveling agent)

A silicone-based compound can be added as a leveling agent to the hardcoat composition in order to impart a leveling property, an antifouling property, and abrasion resistance to the hardcoat layer. A silicone-based compound having a polyalkylsiloxane bond is used. While such compounds can be synthesized, commercial products are readily available. For example, KP series from Shin-Etsu Chemical Co., Ltd., BYK series from BYK-Chemie Japan, and Tego Glide series from EVONIK are available.

A fluorine-based compound can be added to the hardcoat composition as a leveling agent to impart a leveling property, an antifouling property, and abrasion resistance to the hardcoat composition. A fluorine-based compound having a perfluoropolyether bond is used. While such compounds can be synthesized, commercial products are readily available. For example, MEGAFACE RS series from DIC Corporation, KY series from Shin-Etsu Chemical Co., Ltd., and OPTOOL series from Daikin Industries Ltd. are available.

The hardcoat composition preferably contains the leveling agent in an amount between 0.1 wt% and 10 wt% (inclusive) relative to the total weight of the hardcoat composition. The leveling agent content in the hardcoat composition is more preferably between 0.5 wt% and 7 wt% (inclusive), and still more preferably between 1 wt% and 5 wt% (inclusive). A specific example of a preferable leveling agent content in the hardcoat composition is 1 wt%.

(Curing property of hardcoat composition)

The hardcoat composition is preferably energy ray curable, more preferably energy ray curable, and more preferably UV curable. Therefore, the hardcoat composition preferably further contains a photoinitiator. Examples of the photoinitiator include IRGACURE 184 (1-hydroxy-cyclohexyl-phenyl-ketone), IRGACURE 1173 (2-hydroxy-2-methyl-1-phenyl-propane-1-one), IRGACURE TPO (2,4,6-trimethylbenzoyl-diphenyl-phosphine oxide), IRGACURE 819 (bis(2,4,6-trimethylbenzoyl)-phenylphosphine oxide), and Esacure ONE (oligo (2-hydroxy-2-methyl-1-[4-(1-methylvinyl)phenyl]propanone). Among these, IRGACURE TPO or the like is favorable as the photoinitiator from the viewpoint of heat resistance.

The hardcoat composition contains the photoinitiator, for example, in an amount between 1 wt% and 6 wt% (inclusive) relative to the total weight of the hardcoat composition. The photoinitiator content in the hardcoat composition is more preferably between 2 wt% and 5 wt% (inclusive), and still more preferably between 3 wt% and 4 wt% (inclusive). A specific example of a preferable photoinitiator content in the hardcoat composition is 3 wt%.

(Other additives)

The hardcoat composition may contain other additives, for example, at least one kind of additive selected from the group consisting of a heat stabilizer, an antioxidant, a flame retardant, a flame retardant aid, a UV absorber, a mold release agent, and a colorant. An antistatic agent, a fluorescent brightening agent, an antifogging agent, a flow modifier, a plasticizer, a dispersant, an antibacterial agent, or the like may also be added to the hardcoat composition as long as the desired physical properties are not significantly impaired.

The hardcoat composition preferably contains an active energy ray-curable resin such as a (meth)acrylate polymer and nanoparticles in an amount of 60 mass% or more, more preferably 80 mass% or more, and particularly preferably 90 mass% or more. Therefore, the content of components other than the above two main components in the hardcoat composition is preferably less than 40 mass%, more preferably less than 20%, and particularly preferably less than 10%.

A dilution solvent used when preparing the hardcoat composition for forming a hardcoat layer is used to adjust the viscosity and is not particularly limited as long as it is non-polymerizable. The dilution solvent can be used mainly to facilitate application of the hardcoat layer-forming composition to a transparent base material.

Examples of the dilution solvent include toluene, xylene, ethyl acetate, propyl acetate, butyl acetate, methyl cellosolve, ethyl cellosolve, ethyl cellosolve acetate, propylene glycol monomethyl ether acetate, methyl alcohol, ethyl alcohol, isopropyl alcohol, butyl alcohol, diacetone alcohol, acetone, methyl ethyl ketone, methyl isobutyl ketone, cyclohexanone, hexane, heptane, octane, decane, dodecane, propylene glycol monomethyl ether, and 3-methoxy butanol.

<Production of hardcoat layer>

The hardcoat layer is produced by blending the above-described active energy ray-curable resin such as a (meth)acrylate polymer, the polymerization inhibitor, and other material substances. For example, the (meth)acrylate polymer and other components are mixed using a tumbler, and further melted and kneaded by an extruder to produce a hardcoat composition. The form of the hardcoat composition is not limited to pellets, and the hardcoat composition may be in a form of flakes, powder, bulk, or the like.

The hardcoat layer is produced by processing the hardcoat composition into a layer (sheet) by a conventional technique, for example, extrusion molding or cast molding. According to one exemplary extrusion molding, pellets, flakes, or powder of the hardcoat composition is melted and kneaded in an extruder, then extruded from a T-die, etc. The resulting semi-molten sheet is cooled and solidified while being pressed between rolls, thereby forming a sheet.

As a method for coating the hardcoat composition on the surface of a base material layer, a bar coater, a gravure coater, a die coater, dip coat, spray coat, or the like can be employed.

After the hardcoat solution (hardcoat composition) is applied, it is dried at a predetermined temperature. The drying temperature is preferably 30-150°C and more preferably 60-120°C. If the drying temperature is 30°C or lower, there is a high possibility that the organic solvent will remain and affect the physical properties of the hardcoat, whereas if the drying temperature is 150°C or higher, the base material may be deformed.

The thickness of the hardcoat layer is desirably in the range of 1-10 $\mu$m, and more desirably in the range of 2-7 $\mu$m. If the thickness is less than 1 $\mu$m, the specified performance cannot be obtained, whereas if the thickness exceeds 10 $\mu$m, adhesiveness and formability may be deteriorated.

<Properties of hardcoat layer>

Hereinafter, the properties of the hardcoat layer will be described.

(i) Scratch resistance

High scratch resistance can be achieved when the hardcoat layer is cured without a protective film. As will be described in detail below, when a hardcoated laminate used for molding was cured, the scratch resistance on the surface of the hardcoat layer was confirmed to be superior to that of a cured PMMA resin (polymethyl methacrylate resin) or lens resin.

(ii) Pencil hardness

The hardcoat layer cured without a protective film has high hardness. Specifically, a pencil hardness of B or harder can be realized according to the evaluation method of JIS K 5600-5-4: 1999. Preferably, a pencil hardness of F or harder and particularly preferably 2H or harder is realized on the surface of the cured hardcoat layer.

(iii) Adhesiveness

The cured hardcoat composition also have excellent adhesiveness. Specifically, a hardcoat composition with a rate of 0 as defined by the evaluation method of JIS K 5600-5-6, can be obtained.

(iv) Indentation hardness

The indentation hardness of the curable hardcoat layer at 40°C is preferably 100 $N/mm^2$ or higher, more preferably 120 $N/mm^2$ or higher, and still more preferably 150 $N/mm^2$ or higher.
Moreover, the indentation hardness of the curable hardcoat layer at 80°C is preferably 10 $N/mm^2$ or higher, more preferably 12 $N/mm^2$ or higher, and still more preferably 15 $N/mm^2$ or higher.
As described above, a hardcoat layer having an indentation hardness in the predetermined range suitable at a given temperature is particularly suitable for shaping in an uncured state.
As will be described in detail below, the values of the indentation hardness herein are those in accordance with ISO 14577-1.

[Protective Film]

After the hardcoat layer is dried, a protective film may be attached to the hardcoat surface to prevent scratches on the hardcoat surface. The protective film has an adhesive surface with an appropriate adhesive strength on the side that makes contact with the hardcoat layer, and can be attached to the surface of the hardcoat layer. The protective film may consist of a single layer, i.e., only an adhesive layer, but it preferably has a two-layer structure with a base material and an adhesive layer. The protective film having a two-layer structure is layered on the hardcoat layer such that the adhesive side of the adhesive layer makes contact with the hardcoat layer. The protective film may have a multilayer structure which includes a layer in addition to the base material and adhesive layer described above. The protective film may also have a monolayer structure, where the adhesive side of the monolayer structure, i.e., the surface on the hardcoat layer side, has an appropriate adhesive strength.
The base material of the protective film is preferably formed of a thermoplastic resin, and more preferably contains a polyolefin resin. Examples of the polyolefin resin contained in the protective film include polyethylene and polypropylene, which may be either a homopolymer or copolymer. Among the polyolefin resins, polyethylene is preferred.
While low-density polyethylene (LDPE), linear low-density polyethylene (LLDPE), very low-density polyethylene (VLDPE), medium-density polyethylene (MDPE), high-density polyethylene (HDPE), or the like can be used as polyethylene, low-density polyethylene is favorable.
In addition, a copolymer of ethylene or propylene and a monomer that can copolymerize therewith can be used as the polyolefin copolymer. Examples of the monomers that can copolymerize with ethylene or propylene include $\alpha$-olefins, styrenes, dienes, cyclic compounds, and oxygen atom-containing compounds.
Examples of the aforementioned $\alpha$-olefins include 1-butene, 3-methyl-1-butene, 3-methyl-1-pentene, 4-methyl-1-pentene, 1-pentene, 1-hexene, 1-heptene, 1-octene, 1-decene, 1-tetradecene, 1-hexadecene, 1-octadecene, and 1-eicosene. Examples of the aforementioned styrenes include styrene, 4-methylstyrene, and 4-dimethylaminostyrene. Examples of the aforementioned dienes include 1,3-butadiene, 1,5-hexadiene, 1,4-hexadiene, and 1,7-octadiene. Examples of the aforementioned cyclic compounds include norbornene and cyclopentene. Examples of the aforementioned oxygen-containing compounds include hexenol, hexenoic acid, and methyl octenoate. These copolymerizable monomers may be used alone or in combination of two or more. Alternatively, a copolymer of ethylene and propylene may also be used.
These copolymer may be any of the alternating copolymer, random copolymer, or block copolymer.

The polyolefin resin contained in the base material of the protective film may contain a small amount of a modified polyolefin resin modified by a carboxyl group-containing monomer such as acrylic acid, maleic acid, methacrylic acid, maleic anhydride, fumaric acid, or itaconic acid. Modification can usually be performed by copolymerization or graft modification.

The base material of the protective film preferably contain 80 wt% or more polyolefin resin, more preferably, 90 wt% or more polyolefin resin, and still more preferably 95 wt% or more polyolefin resin, relative to the total weight of the base material.

The adhesive layer of the protective film is preferably formed of an elastomer or thermoplastic resin. Examples of the thermoplastic resin contained in the adhesive layer include polyolefin resins such as polypropylene and modified polyolefin. The polyolefin resin contained in the protective film (masking film) may be, for example, polyethylene or polypropylene, which may be either a homopolymer or copolymer. Among polyolefin resins, polyethylene is preferable.

The adhesive layer of the protective film preferably contains 80 wt% or more elastomer or thermoplastic resin, more preferably 90 wt% or more elastomer or thermoplastic resin, and still more preferably 95 wt% or more elastomer or thermoplastic resin, relative to the total weight of the adhesive layer.

The thickness of the protective film of the insert film is preferably 10-100 $\mu$m, and more preferably 20-80 $\mu$m.

The adhesive surface of the protective film, that is, the adhesive surface that makes contact with the surface of the hardcoat layer, preferably has a surface free energy of 30.0 (mN/m) or more before it is attached to the hardcoat layer. The value of the surface free energy is obtained by measuring the average contact angles of 1 $\mu$l of water and 1 $\mu$l of diiodomethane ($CH_2I_2$) placed on the aforementioned adhesive surface, according to 0/2 method, and then calculating the value from these average contact angles by OWRK method (Owens-Wendt-Rabel-Kaelble method). The value of the surface free energy of the aforementioned adhesive surface is preferably 31.0 (mN/m) or higher.

The average contact angle value of the aforementioned 1 $\mu$l of diiodomethane in a static state on the adhesive surface of the protective film that makes contact with the surface of the hardcoat layer is preferably 64° or less, more preferably 60° or less, and still more preferably 58° or less.

A protective film has high wettability when the adhesive surface of thereof has a high surface free energy or a small diiodomethane contact angle in a static state as described above. When the surface of the hardcoat layer is covered by a protective film having high wettability, the surface of the hardcoat layer can easily be kept smooth without causing microscopic unevenness on the surface.

Moreover, such a protective film can easily improve the formability of the hardcoat layer because the surface of the hardcoat layer, even when it is in a soft uncured state, is reliably protected by the protective film.

It is preferable that the value of surface roughness Sa (ISO 25178) of the adhesive surface of the protective film that will make contact with the hardcoat layer is preferably 0.100 $\mu$m or less before it is attached to the hardcoat layer (in the unattached state). The value of surface roughness Sa of the adhesive surface of the protective film in the unattached state is more preferably 0.090 $\mu$m or less, still more preferably 0.080 $\mu$m or less, and particularly preferably 0.070 $\mu$m or less.

The value of the adhesive strength of the adhesive surface of the protective film to the surface of PMMA (polymethyl methacrylate resin layer) is preferably between 5 (mN/25 mm) and 5000 (mN/25 mm) (inclusive), and more preferably between 9 (mN/25 mm) and 3000 (mN/25 mm) (inclusive).

<Method for manufacturing insert film>

An insert film is manufactured as follows. First, a material such as a resin composition is processed into a layer (sheet) by a conventional technique, for example, extrusion molding or cast molding, to produce a base material layer. According to one exemplary extrusion molding method, pellets, flakes, or powder of a resin composition is melted and kneaded in an extruder, then extruded from a T-die, etc. The resulting semi-molten sheet is cooled and solidified while being pressed between rolls, thereby forming a sheet.

Then, the hardcoat composition produced as described above is applied to the outer surface of the base material layer having a single layer or multiple layers, thereby forming a curable hardcoat layer.

The protective film described above is optionally layered on the surface of the resulting base material layer and curable hardcoat layer on the hardcoat layer side, thereby manufacturing an insert film.

[Thermoplastic resin layer]

A thermoplastic resin layer contained in a film insert molded article of the present invention is layered on the insert film described above. The thermoplastic resin layer is formed of a thermoplastic resin. The thermoplastic resin layer is preferably manufactured by a step of injecting a thermoplastic resin in a molten state onto the surface of the insert film that has been shaped into a predetermined shape.

The thermoplastic resin layer is formed of, for example, but not limited to, polyethylene, polypropylene, polystyrene, polyvinyl chloride, an ABS resin, an AS resin, polyethylene terephthalate, an acrylic resin (PMMA), polycarbonate, polyethylene terephthalate (PET), polyacetal, polyamide, or the like.

[Method for manufacturing film insert molded article]

A film insert molded article is manufactured as follows using the insert film described above. Specifically, a film insert molded article is manufactured by steps including a shaping step in which the insert film is shaped into a predetermined shape, and a resin layer forming step in which the thermoplastic resin layer described above is formed.

[Shaping step (thermoforming after-cure type insert film)]

Any method that can form a film by heating can be employed as a step for shaping the after-cure type insert film. For example, the insert film can be thermoformed into a desired shape by pressure forming where the base material layer of the insert film is heated and formed by air pressure, vacuum forming under vacuum conditions, TOM forming, or the like.

Shaping an insert film means to change the shape of the insert film so that it is suitable for use as a molded article, and usually includes making unevenness, bended areas, etc. on a sheet-like insert film. The shape of the bended area realized by forming is generally expressed by the height (H) and radius (R) of the mold. The larger the height is, the larger the width of the stretched area becomes while the smaller the radius is, the more acute the angle becomes, making it more difficult to follow the shape of the bended area.

The forming temperature upon the shaping step is mainly determined by the Tg (glass transition temperature) of the thermoplastic resin of the base material layer. The forming temperature should be higher than the Tg of the thermoplastic resin of the base material layer by 0-70°C, preferably 20-40°C. For example, for a laminate containing a base material layer made of general bisphenol-A type polycarbonate, it is optimal to perform forming in the range of 170-190°C.

[Step of forming resin layer]

A thermoplastic resin layer is formed, for example, by fixing the thermoformed after-cure type insert film to a predetermined injection mold and injecting a thermosetting resin thereto, thereby obtaining a molded film insert article. More specifically, a thermoplastic resin is preferably injected onto the surface of the insert film fixed to the mold on the other side from the curable hardcoat layer, thereby providing a thermoplastic resin layer.

As described above, for example, polyethylene, polypropylene, polystyrene, polyvinyl chloride, an ABS resin, an AS resin, polyethylene terephthalate, an acrylic resin (PMMA), polycarbonate, polyethylene terephthalate (PET), polyacetal, polyamide, or the like can be used as the thermoplastic resin.

The thickness of the thermoplastic resin layer is not particularly limited, but it is preferably 0.5-20 mm. The thickness of the thermoplastic resin layer is, for example, 0.5-20 mm, preferably 0.8-15 mm, and more preferably 1-10 mm.

The mold temperature during injection molding is, for example, 20-100°C, desirably 30-90°C, and more preferably 40-80°C. If the temperature is high, the after-cure hardcoat layer is likely to fuse to the mold and cause appearance defects, whereas if the temperature is low, the thermoplastic resin does not flow well during injection and a molded product may not be obtained.

In addition, as described above, by adjusting the mold temperature to be in a relatively low range, the insert film can be shaped while the curable hardcoat layer remains uncured, thereby preventing deterioration of appearance. In addition, it is possible to suppress occurrence of cracks and breaks of the curable hardcoat film even under the pressure of the thermoplastic resin that is injected in the subsequent resin layer forming step.

Furthermore, the indentation hardness of the curable hardcoat layer in the resin layer forming step, i.e., a state where the mold used in the resin layer forming step is heated, is preferably in a predetermined range. For example, for temperature in a range of 40-100°C, that is, a temperature range that can be employed for the heating during the resin layer forming step, the indentation hardness is preferably 100 $N/mm^2$ or more at 40°C and 10 $N/mm^2$ or more at 80°C, the indentation hardness is more preferably 120 $N/mm^2$ or more at 40°C and 12 $N/mm^2$ or more at 80°C, and the indentation hardness is still more preferably 150 $N/mm^2$ or more at 40°C and 15 $N/mm^2$ or more at 80°C. Thus, the value of the indentation hardness of the curable hardcoat layer, in particular the value of the indentation hardness of the curable hardcoat layer at the temperature employed for the heating during the resin layer forming step, is adjusted so that the strength of the curable hardcoat layer is maintained at an appropriate level and the layer is not damaged during the step of forming the thermoplastic resin layer.

As described above, the values of the indentation hardness are those in accordance with ISO 14577-1.

Since the polymerization reaction of the hardcoat layer of the insert film by heating can also be suppressed, the insert film can be formed with the protective film attached thereto. In other words, the insert film can be heated and

formed with the protective film attached thereto. By performing a series of operations with the protective film attached, not only the occurrence of scratches but also the entrapment of foreign substances can be suppressed.

However, an insert film without a protective film may also be used in the resin layer forming step.

[Curing step]

As a result of the above-described resin layer forming step, a film insert molded article having the curable hardcoat layer remaining uncured can be obtained. Then, by a curing step such as irradiating the thus-obtained film insert molded article with an energy ray, a film insert molded article having a cured hardcoat layer can be produced.

When ultraviolet light is used in the curing step, the integrated light intensity is about 100-1000 mJ, preferably 200-800 mJ, more preferably 300-700 mJ and, for example, about 500 mJ.

[Manufacturing of molded body and article]

As described above, a film insert molded article, which is obtained by curing the film insert molded article having an uncured hardcoat layer with an active energy ray, e.g., a ultraviolet ray, has excellent properties on the surface on the hardcoat layer side. Specifically, all of the following can be achieved for the surface of the article on the hardcoat layer side: high pencil hardness, preferably pencil hardness of B or harder, more preferably 2H or harder, and still more preferably 4H or harder according to JISK 5600-5-4: 1999; high scratch resistance; excellent adhesiveness, for example, an adhesiveness level with evaluation rate of 0 according to JISK 5600-5-6; and resistance against chemicals such as sunscreen.

Examples of the above-described molded body and article include resin film laminates used in mobile devices, automobile interior parts, and the like.

EXAMPLES

Hereinafter, the present invention will be described in more detail. The present invention, however, is not limited to the following examples, and may be modified and carried out as desired without departing from the gist of the present invention.

Measurement of indentation hardness

The indentation hardness of the cross section in the thickness direction of each of the insert films of the examples and comparative examples was measured under the following conditions using a nanoindentation hardness tester (model no: ENT-NEXUS) manufactured by Elionix, Inc. The center area of the film was used for the measurement, and the average of values measured at 20 points near the center of the film in the thickness direction was defined as the indentation hardness ($N/mm^2$).

Indenter: Berkovich indenter (vertical angle 65.03°)
Surface detection: Load was set so that the amount of displacement was 1/10 of the after-cure hardcoat layer (0.5 mN)
Load curve: 0.5 mN over 10 seconds (linear)
Creep: 50 seconds, 0.5 mN
Unloading curve: 0 mN over 10 seconds (linear)
Heating conditions: The stage was heated in increments of 10°C, and measurements were conducted from 40°C to 100°C. The value of the indentation hardness of the insert film was calculated according to ISO 14577-1 2002-10-01 Part 1 (calculated using the built-in software).

Preparation example 1 (Production of hardcoat composition)

As an active energy ray-curable resin (photo-polymerizable compound), ART CURE RA-3602MI manufactured by Negami Chemical Industrial Co., Ltd., namely, a polymer acrylate-type paint (acrylic polymer having a (meth)acryloyl group (reactive group) on the side chain of an acrylic skeleton), was used. To this polymer acrylate-type paint, a photoinitiator IRGACURE TPO (2,4,6-trimethylbenzoyl-diphenyl phosphine oxide; 3 wt% relative to the solid content) and a leveling agent BYK-UV3500 manufactured by BYK-Chemie (polyether-modified polydimethylsiloxane having an acrylic functional group; 1 wt% relative to the solid content) were added to give a mix solution. The resulting mixture was diluted with propylene glycol monoethyl ether as a solvent to a solid concentration of 30%.

Manufacturing example 1 (production of insert film)

DF02U (manufactured by Mitsubishi Gas Chemical Company, Inc.: 0.254 mm thick), namely, a two-layer product of bisphenol A-type polycarbonate and PMMA, was used as the base material layer. Onto the surface of the base material layer on the PMMA side, the solution of the active energy ray-curable compound obtained in Preparation example 1 was applied as a hardcoat composition using a bar coater to obtain a film thickness of 3 μm, which was dried at 120°C for 5 minutes to give an after-cure type insert film.

Example 1 (production of film insert molded article)

The after-cure type insert film of Manufacturing example 1 was preheated at 190°C for about 40 seconds. Immediately after that, the insert film was shaped using high-pressure air at 1.5 MPa. A mold having a right-angled protrusion with a deep-drawing height was used. The right-angled mold used for the pressure forming had both vertical and horizontal sizes of 100 mm, where radius R and height of the area that makes contact with the right-angled part of the mold were 2 mm and 7 mm, respectively.

The above-described film was placed on the cavity side of an injection mold identical to the one used for the above pressure forming, and a molten thermoplastic resin was injected onto it to manufacture a film insert molded article. A polycarbonate resin (Iupilon H-3000 manufactured by Mitsubishi Engineering-Plastics Corporation) was used as the injection resin. The mold temperature was set at 40°C. The appearance after the injection was evaluated to be good with no cracks observed. Furthermore, the indentation hardness, etc. at respective temperatures on the coated side in an uncured state are shown in Table 3.

Examples 2-7

Film insert molded articles of Example 2 and the rest of the examples were produced in the same manner as Manufacturing example 1 and Example 1, except that hardcoat compositions having the components shown in Table 2 below were used instead of that used in Preparation example 1 described above (Production of hardcoat composition).

[Table 2]

| | Resin | | Monomer DPHA | Nano-silica | | Silicone UV-3500 | TPO | Base material |
|---|---|---|---|---|---|---|---|---|
| | Main component | Ratio (by weight) | | SM-AL3 | MEK-AC-4130Y | | | |
| Example 1 | Reactive acrylic polymer | 100 | - | - | - | 1 | 3 | DF02U |
| Example 2 | Reactive acrylic polymer | 40 | - | 60 | - | 1 | 3 | DF02 U |
| Example 3 | Reactive acrylic polymer | 70 | - | - | 30 | 1 | 3 | DF02U |
| Example 4 | Reactive acrylic polymer | 70 | - | - | 30 | 1 | 3 | DF02U |
| Example 5 | Reactive acrylic polymer | 70 | - | - | 30 | 1 | 3 | DF02U |
| Example 6 | Tack-free urethane acrylat | 70 | - | - | 30 | 1 | 3 | DF02U |
| Example 7 | Reactive acrylic polymer | 70 | - | - | 30 | 1 | 3 | PC |
| Comparative example 1 | (*) | | | | | | | PC |
| Comparative example 2 | Reactive acrylic polymer | 70 | - | - | 30 | 1 | 3 | DF02U |
| Comparative example 3 | Reactive acrylic polymer | 70 | - | - | 30 | 1 | 3 | DF02U |
| Comparative example 4 | Tack-free urethane acrylat | 70 | - | - | 30 | 1 | 3 | DF02U |

(continued)

| | Resin | | Monomer DPHA | Nano-silica | | Silicone UV-3500 | TPO | Base material |
|---|---|---|---|---|---|---|---|---|
| | Main component | Ratio (by weight) | | SM-AL3 | MEK-AC-4130Y | | | |
| Comparative example 5 | Polymer acrylate paint | (*) | | | | | | DF02U |
| (*) Unconfirmed | | | | | | | | |

The abbreviations of the components indicated in Table 2 are as follows.

MEK-AC-4130Y: Methyl ethyl ketone-dispersed silica sol ($SiO_2$ content 30%; particle size 40-50 nm) manufactured by Nissan Chemical Corporation.
SM-AL3: Silica nanoparticles manufactured by Admatechs Company Limited
TPO: Polymerization initiator (2,4,6-trimethylbenzoyl-diphenyl-phosphine oxide)
UV-3500: Acrylate-containing polyether-modified silicone manufactured by BYK (leveling agent)

Moreover, the product names of the resins indicated in Table 2 are as follows

Example 2: ART CURE RA-3953 manufactured by Negami Chemical Industrial Co., Ltd.
Example 3: ART CURE RA-4101 manufactured by Negami Chemical Industrial Co., Ltd.
Example 4: SMP-360A manufactured by Kyoeisha Chemical Co., Ltd.
Example 5: SMP-550A manufactured by Kyoeisha Chemical Co., Ltd.
Example 6: UN-954 manufactured by Negami Chemical Industrial Co., Ltd.
Example 7: SMP-360A manufactured by Kyoeisha Chemical Co., Ltd.
Comparative example 1: Film manufactured by MacDermid
Comparative example 2: SMP-220A manufactured by Kyoeisha Chemical Co., Ltd.
Comparative example 3: SMP-250A manufactured by Kyoeisha Chemical Co., Ltd.
Comparative example 4: UN-952 manufactured by Negami Chemical Industrial Co., Ltd.
Comparative example 5: ERS-830 manufactured by DIC Corporation

Comparative example 6

The after-cure type insert film of Manufacturing example 1 was preheated at 190°C for about 40 seconds. Immediately after that, the insert film was shaped using high-pressure air at 1.5 MPa using the same mold as Example 1. Subsequently, the after-cure hardcoat was cured by UV irradiation (integrated light intensity of 500 mJ).

The above-described film was placed on the cavity side of an injection mold identical to the one used in Example 1, and a molten thermoplastic resin was injected onto it to manufacture a film insert molded article. A polycarbonate resin (Iupilon H-3000 (product name) manufactured by Mitsubishi Engineering-Plastics Corporation) was used as the injection resin. The mold temperature was set at 40°C. As a result of evaluation of the appearance after the injection, cracks were observed.

Comparative example 7

A film insert molded article was manufactured by the same method as Example 1 except that the mold temperature upon injection molding was 100°C. As a result, the after-cure-type hardcoat layer of the insert film fused to the mold, resulting in a poor appearance.

Comparative example 8

A film insert molded article was manufactured using the components shown in Table 2 above.

Specifically, a film insert molded article was manufactured by the same method as Example 1 except that a MacDermid product (product name: XtraForm, film thickness: 0.254 μm) was used as the after-cure hardcoat film. As a result, the after-cure-type hardcoat layer of the insert film fused to the mold, resulting in a poor appearance and peeling of the hardcoat layer. Furthermore, the indentation hardness at respective temperatures on the coated side in the uncured state are shown in Table 3.

[Table 3]

| | Main component of resin | Indentation hardness [N/mm²] | | | | | | | Insert formability (*)/ Appearance ((*) Uncured, mold temperature 40°C) |
|---|---|---|---|---|---|---|---|---|---|
| | | 40°C | 50°C | 60°C | 70°C | 80°C | 90°C | 100°C | |
| Example 1 | Reactive acrylic polymer | 210.1 | 134.4 | 57.9 | 31.1 | 18.1 | 13.1 | 10.2 | Good appearance |
| Example 2 | Reactive acrylic polymer | 192.5 | 157.9 | 167.8 | 170.5 | 122.9 | 96.3 | 81.5 | Good appearance |
| Example 3 | Reactive acrylic polymer | 292.4 | 151.7 | 144.4 | 133.9 | 111.1 | 85 | 62.8 | Good appearance |
| Example 4 | Reactive acrylic polymer | 293.8 | 75.6 | 45.6 | 24.1 | 17.8 | 10.2 | 7.7 | Good appearance |
| Example 5 | Reactive acrylic polymer | 341 | 122.6 | 98.3 | 61.9 | 45.1 | 29.9 | 18.1 | Good appearance |
| Example 6 | Tack-free urethane acrylate | 270.2 | 103.1 | 52.5 | 29.7 | 19.3 | 17.2 | 11.4 | Good appearance |
| Example 7 | Reactive acrylic polymer | 304.7 | 96.8 | 53.2 | 31.6 | 18.1 | 11.2 | 9.8 | Good appearance |
| Comparative example 1 | - (MacDermid made film) | 20.3 | 11.9 | 6.3 | 4.2 | 3.2 | 2.9 | 2.9 | Poor appearance |
| Comparative example 2 | Reactive acrylic polymer | 16.8 | 9.1 | 6.5 | 6.8 | 6.6 | 7.4 | 8.3 | Poor appearance |
| Comparative example 3 | Reactive acrylic polymer | 40 | 12.8 | 7.3 | 6.2 | 5.3 | 5 | 5.2 | Poor appearance |
| Comparative example 4 | Tack-free urethane acrylate | 25.2 | 9.9 | 5.7 | 4.6 | 3.6 | 3.3 | 3.8 | Poor appearance |
| Comparative example 5 | Polymer acrylate paint | 13.1 | 7.3 | 7.2 | 6.2 | 5.3 | 4.5 | 4.2 | Poor appearance |

**Example 8**

The film insert molded article manufactured in Example 1 was subjected to UV irradiation (integrated light intensity of 500 mJ) to cure the after-cure-type hardcoat layer of the insert film with ultraviolet light. The properties of the resulting cured molded article of Example 8 were evaluated as follows

<Scratch resistance after curing>

A steel wool of #0000 was rubbed back and forth on the surface of the cured hardcoat layer 15 times under the pressure of 100 gf/$cm^2$. The absolute value of haze change ($\Delta H$), i.e., the difference between the haze values measured before and after the scratch test according to JIS K 7136: 2000, was calculated and evaluated. Those with a $\Delta H$ value of less than 3.0% were evaluated to have good scratch resistance.

<Chemical resistance after curing>

Neutrogena SPF100 was applied to the surface of the cured hardcoat layer. After an hour at 80°C, the surface was visually observed and those with no flaw were evaluated to have good chemical resistance.

<Pencil hardness after curing>

Measurement was conducted under the conditions according to JIS K 5600-5-4: 1999, and evaluation was made by the hardest pencil number that left no scratch.

<Adhesiveness>

Adhesiveness was evaluated by the evaluation method according to JIS K5600-5-6: 1999, where adhesiveness was evaluated to be good when there was no peeling.

[Table 4]

| | Scratch resistance | Chemical resistance | Pencil hardness | Adhesiveness |
|---|---|---|---|---|
| Example 8 | Good | Good | 4H | Good |

## Claims

1. A film insert molded article comprising:

    a shaped curable insert film; and
    a thermoplastic resin layer layered on said insert film,
    wherein, a curable hardcoat layer of the insert film is in an uncured state.

2. The film insert molded article according to Claim 1, which is obtained by shaping the insert film and injecting a molten thermoplastic resin onto the surface the insert film on the other side from the curable hardcoat layer.

3. The film insert molded article according to either one of Claims 1 and 2, wherein the curable hardcoat layer contains an active energy ray-curable resin having a (meth)acryloyl group.

4. The film insert molded article according to Claim 3, wherein the active energy ray-curable resin having a (meth)acryloyl group has a (meth)acrylate skeleton.

5. The film insert molded article according to any one of Claims 1 to 4, wherein the indentation hardness of the curable hardcoat layer is 100 N/$mm^2$ or more at 40°C and 10 N/$mm^2$ or more at 80°C, the indentation hardness being values according to ISO 14577-1.

6. The film insert molded article according to any one of Claims 1 to 5, wherein the curable hardcoat layer contains nanoparticles.

7. The film insert molded article according to any one of Claims 1 to 6, wherein the curable hardcoat layer contains a leveling agent.

8. The film insert molded article according to any one of Claims 1 to 7, wherein the curable hardcoat layer is an active energy ray-curable layer.

**9.** A film insert molded article which is obtained by curing the curable hardcoat layer of the film insert molded article according to any one of Claims 1 to 8.

**10.** A method for manufacturing a film insert molded article, the method comprising:

a shaping step in which a curable insert film is shaped; and
a resin layer forming step in which a molten thermoplastic resin is injected onto a surface of the insert film to form a thermoplastic resin layer,
wherein a curable hardcoat layer of the insert film is in an uncured state.

**11.** The method for manufacturing a film insert molded article according to Claim 10, wherein, in the resin layer forming step, the temperature of a mold used for injection molding of the thermoplastic resin is 40-80°C.

**12.** The method for manufacturing a film insert molded article according to either one of Claims 10 and 11, wherein: in the resin layer forming step, the indentation hardness of the curable hardcoat layer is 10 $N/mm^2$ or more at 80°C and 100 $N/mm^2$ or more at 40°C when used for injection molding, the indentation hardness being values according to ISO 14577-1.

**13.** The method for manufacturing a film insert molded article according to any one of Claims 10 to 12, further comprising a curing step in which the curable hardcoat layer is cured.

**14.** A curable insert film, comprising:

a base material layer; and
a curable hardcoat layer layered on the base material layer,
wherein the indentation hardness of the curable hardcoat layer is 100 $N/mm^2$ or more at 40°C and 10 $N/mm^2$ or more at 80°C, the indentation hardness being values according to ISO 14577-1.

**15.** The curable insert film according to Claim 14, wherein the curable hardcoat layer contains an active energy ray-curable resin having a (meth)acryloyl group.

**16.** The curable insert film according to Claim 15, wherein the active energy ray-curable resin having a (meth)acryloyl group has a (meth)acrylate skeleton.

**17.** The curable insert film according to any one of Claims 14 to 16, wherein the curable hardcoat layer contains nanoparticles or a leveling agent.

**18.** The curable insert film according to any one of Claims 14 to 17, wherein the curable hardcoat layer is an active energy ray-curable layer.

**19.** The curable insert film according to any one of Claims 14 to 18, further comprising a protective film layered on the hardcoat layer to make contact with the surface of the hardcoat layer on the other side from the base material layer.

[Figure 1]

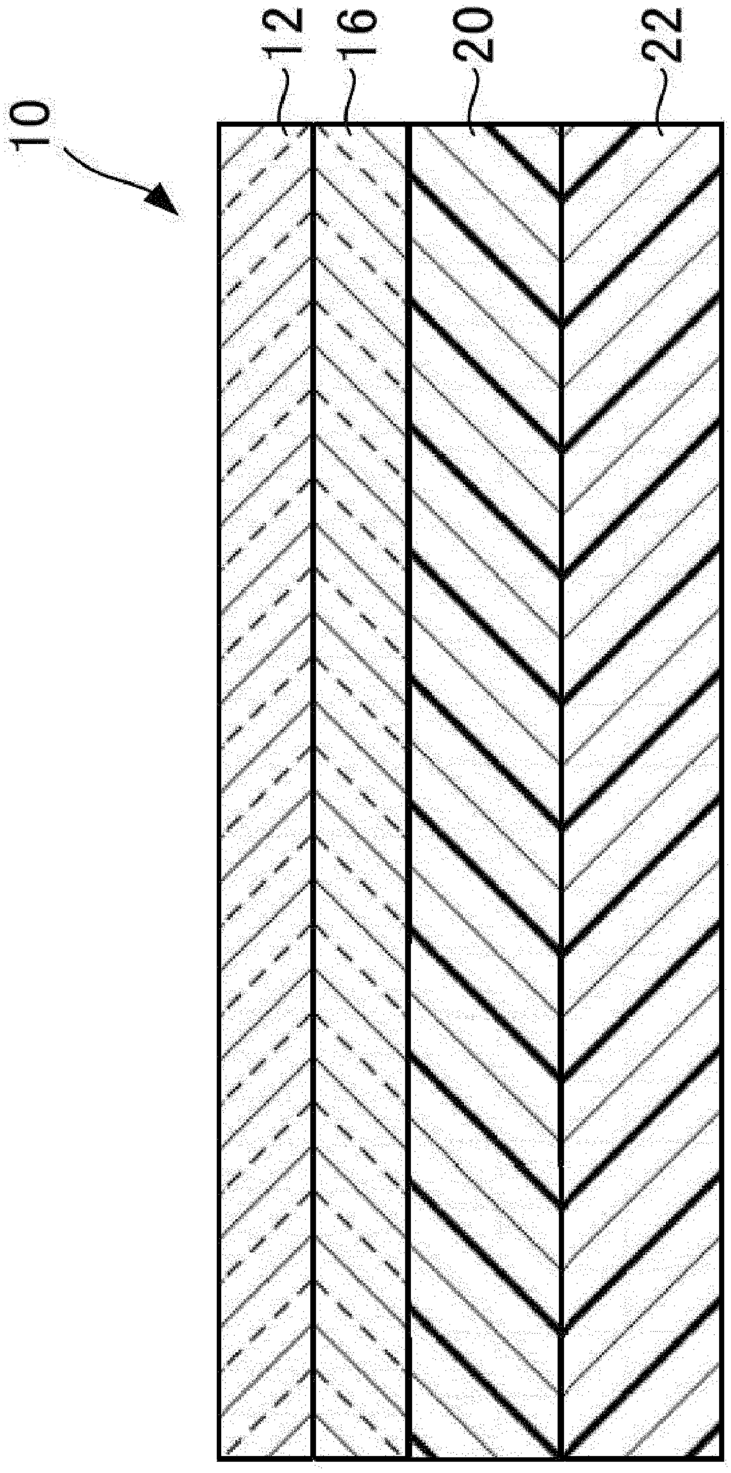

**INTERNATIONAL SEARCH REPORT**

International application No. PCT/JP2021/012498

A. CLASSIFICATION OF SUBJECT MATTER
B29C 45/14(2006.01)i; B32B 27/08(2006.01)i
FI: B32B27/08; B29C45/14
According to International Patent Classification (IPC) or to both national classification and IPC

B. FIELDS SEARCHED

Minimum documentation searched (classification system followed by classification symbols)
B29C45/14; B32B27/08

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2019-147885 A (PANAC CO., LTD.) 05 September 2019 (2019-09-05) claims, paragraphs [0010]-[0113]<br>claims, paragraphs [0010]-[0113] | 1, 3-10, 12-18<br>2, 11, 19 |
| X<br>Y | WO 2018/038101 A1 (PANAC CO., LTD.) 01 March 2018 (2018-03-01) claims, paragraphs [0015]-[0102]<br>claims, paragraphs [0015]-[0102] | 1, 3-10, 12-18<br>2, 11, 19 |
| Y | WO 2014/203917 A1 (MITSUBISHI GAS CHEMICAL CO., INC.) 24 December 2014 (2014-12-24) claims, paragraphs [0016]-[0051] | 2, 11, 19 |
| Y | JP 2019-150952 A (FUJI BAKELITE CO., LTD.) 12 September 2019 (2019-09-12) paragraphs [0044]-[0051], examples 1-3 | 11 |
| Y | JP 2003-305746 A (SHIN-ETSU POLYMER CO., LTD.) 28 October 2003 (2003-10-28) claims, paragraphs [0046]-[0058] | 11 |
| A | WO 2014/083732 A1 (PANASONIC IP MANAGEMENT CO., LTD.) 05 June 2014 (2014-06-05) entire text, all drawings | 1-19 |

☐ Further documents are listed in the continuation of Box C.　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 June 2021 (02.06.2021) | 15 June 2021 (15.06.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application no.
PCT/JP2021/012498

| Patent Documents referred in the Report | Publication Date | Patent Family | Publication Date |
|---|---|---|---|
| JP 2019-147885 A | 05 Sep. 2019 | (Family: none) | |
| WO 2018/038101 A1 | 01 Mar. 2018 | (Family: none) | |
| WO 2014/203917 A1 | 24 Dec. 2014 | CN 105392612 A whole document | |
| JP 2019-150952 A | 12 Sep. 2019 | (Family: none) | |
| JP 2003-305746 A | 28 Oct. 2003 | (Family: none) | |
| WO 2014/083732 A1 | 05 Jun. 2014 | US 2015/0290852 A1 whole document | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016147489 A
- JP 2007179018 A